Europäisches Patentamt

European Patent Office

Office européen des brevets

(19)

(11) Veröffentlichungsnummer: **0 258 555**
**B1**

(12) # EUROPÄISCHE PATENTSCHRIFT

(45) Veröffentlichungstag der Patentschrift:
29.08.90

(21) Anmeldenummer: 87109086.6

(22) Anmeldetag: 24.06.87

(51) Int. Cl.⁵: **B65G 17/08**, B65G 17/38

(54) **Förderband.**

(30) Priorität: 03.09.86 DE 3629908

(43) Veröffentlichungstag der Anmeldung:
09.03.88 Patentblatt 88/10

(45) Bekanntmachung des Hinweises auf die Patenterteilung:
29.08.90 Patentblatt 90/35

(84) Benannte Vertragsstaaten:
DE ES FR IT

(56) Entgegenhaltungen:
DE-A- 1 781 020
DE-A- 2 145 088
DE-C- 948 049
FR-A- 1 004 792

(73) Patentinhaber: AGROB AG, Münchner Str. 101,
D-8045 Ismaning(DE)

(72) Erfinder: Plank, Hubert, Bertelestrasse 30,
D-8000 München 71(DE)

(74) Vertreter: Tetzner, Volkmar, Dr.-Ing. Dr. jur.,
Van-Gogh-Strasse 3, D-8000 München 71(DE)

## Beschreibung

Die Erfindung betrifft ein Förderband entsprechend dem Oberbegriff des Patentanspruches 1.

Ein Förderband der im Oberbegriff des Patentanspruches 1 vorausgesetzten Art soll beispielsweise in der keramischen Industrie dazu Verwendung finden, Keramikteile durch einen Brennofen zu transportieren. Bisher bekannte Förderbänder, die für derartige Hochtemperatur-Anwendungen benutzt werden, sind beispielsweise als Stahlförderbänder oder Gliederketten ausgebildet und müssen in Längsrichtung gespannt werden, damit sie nicht durchhängen. Hierdurch ergeben sich in der Hochtemperaturzone Zugspannungen im Förderband, die zu einem raschen Verschleiß führen.

Aus DE-C- 948 049 ist eine Transportbandkette aus Kettenstäben mit kugeligen oder balligen Köpfen und hohlkugelartig ausgebildeten Verbindungsstükken bekannt, in denen die Köpfe der Kettenstäbe pfannenartig gelagert sind. Die hohlkugelartigen Verbindungsstücke sind in Zugrichtung der Kette geteilt und durch Schraubenbolzen miteinander verbunden, und die vorhandenen Durchstecklöcher durch die Kettenstäbe sind mit Dichtungsbälgen abgedichtet. Die Verbindungsstücke besitzen ferner zur Aufnahme eines Transportbandes Befestigungselemente, z. B. Tragteller; außerdem weisen die Verbindungsstücke Laufräder auf, über die die Ketten auf Schienen geführt sind. Eine solche Transportband kette ist in ihrer Konstruktion äußerst aufwendig und kaum für ein Hindurchführen durch Hochtemperaturzonen geeignet. Eine Gelenkkette für Fördereinrichtungen ist aus DE-A- 21 45 088 bekannte, wobei diese Gelenkkette sich aus gleichen Kettengliedern zusammensetzt, die an ihren einen Enden etwa halbkugelförmige Köpfe und an ihren entgegengesetzten Enden den Köpfen angepaßte Aufnahmen mit kalottenförmigen Sitzflächen aufweisen.

Ferner ist in FR-A- 10 04 792 eine Art Gelenkketten-Förderband offenbart, das in seinem allgemeinen Aufbau dem im Oberbegriff des Anspruches 1 vorausgesetzten Förderband entspricht und bei dem je zwei aufeinanderfolgende Glieder durch ein stabförmiges Verbindungselement mit verdickten Enden und zylindrischem Mitteilteil etwa kugelgelenkig miteinander verbunden sind. Auf diese Weise soll eine Art Stauförderer gebildet werden, der beim Anstauen von auf seiner Oberseite getragenen Gegenständen unter diesen Gegenständen hindurchgleiten kann, wozu die Glieder eine glatte Oberseite ohne vorstehende Kanten oder sonstige Änderungen bilden soll. Die Glieder weisen dabei lediglich in ihren Endbereichen eingeformte Ausnehmungen auf, die den Verbindungselementen angepaßt und nur von unten her zugänglich sind. Zumindest im Bereich des jeweiligen Fördertrumes eines solchen Förderbandes sind die einzelnen Glieder durch Gleitschienen abgestützt, d. h. die Fördertrums sind nicht selbsttragend ausgeführt. Diese bekannte Förderbandausführung ist aufgrund ihrer Konstruktion für einen Transport von Keramikteilen durch einen Brennofen praktisch nicht geeignet.

Der Erfindung liegt daher die Aufgabe zugrunde, ein Förderband ensprechend dem Oberbegriff des Anspruches 1 so auszubilden, daß es einerseits selbsttragend und damit durchbiegungsfrei und andererseits keinen nennenswerten Zugspannungen ausgesetzt ist. Das erfindungsgemäße Förderband soll sich daher auch bei einer Hochtemperaturanwendung durch weitgehende Verschleißfreiheit auszeichnen.

Diese Aufgabe wird erfindungsgemäß durch die kennzeichnenden Merkmale des Anspruches 1 gelöst.

Zweckmäßige Ausgestaltung der Erfindung sind Gegen stand der Unteransprüche.

Das erfindungsgemäße Förderband besitzt eine selbsttragende, durchbiegungsfreie Ausführung. Es muß infolgedessen nicht in Längsrichtung gespannt werden. Auf diese Weise werden Zugspannungen vermieden, die besonders in der Hochtemperaturzone zu beträchtlichem Verschleiß führen.

Das erfindungsgemäße Förderband ist in Länge und Breite unbegrenzt erweiterbar und läßt sich daher - aufbauend auf lediglich zwei Grundelementen - jedem Verwendungszweck auf einfache Weise anpassen.

Da die beiden Verbindungselemente mit einem gewissen Längsspiel in der Längsnut des zugehörigen Gliedes gehaltert sind, brauchen bei der Fertigung keine engen Toleranzen eingehalten zu werden. Je nach Anwendungszweck des Förderbandes kann als Material für die Glieder und die Verbindungselemente Metall, Sintermetall, Keramik, Graphit (Kohlenstoff) oder Kunststoff gewählt werden.

Einige Ausführungsbeispiele der Erfindung sind in der Zeichnung veranschaulicht. Es zeigen

Fig. 1 eine ganz schematisch gehaltene Gesamtansicht des Förderbandes;

Fig. 2 einen Querschnitt durch ein Gliederpaar entlang der Linie II-II in Fig. 3;

Fig. 3 eine Aufsicht auf das Gliederpaar gemäß Fig. 2;

Fig. 4 eine Schnittansicht entlang der Linie IV-IV in Fig. 3;

Fig. 5 eine Teil-Aufsicht auf die Oberseite des Förderbandes mit drei parallel nebeneinander laufenden Gliederlängsreihen, bei einer ersten Ausführungsart von Gliederpaaren;

Fig. 6 eine gleichartige Aufsicht wie in Fig. 5, jedoch bei einer anderen Ausführungsart der Gliederpaare;

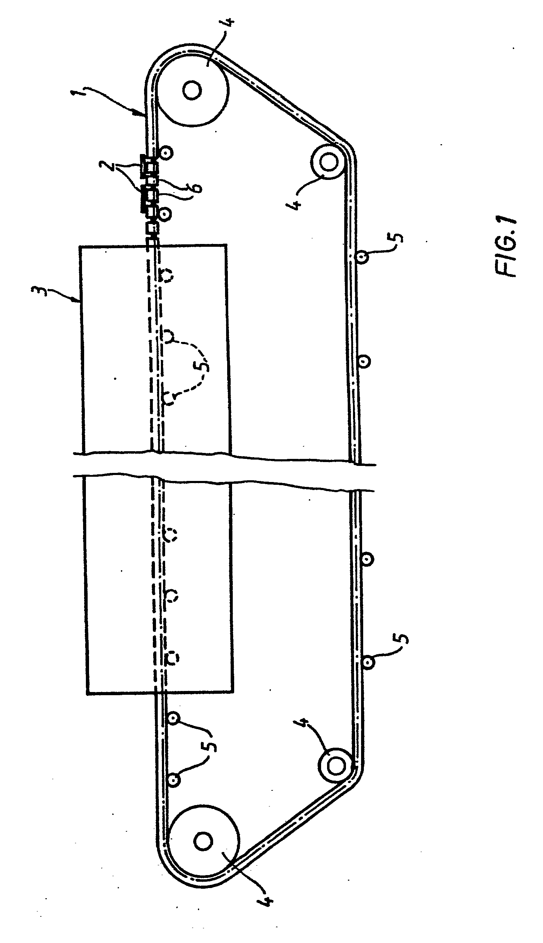

Bei der in Fig. 1 veranschaulichten, rein schematischen Seitenansicht des Förderbandes 1 sei angenommen, daß dieses Förderband 1 in der keramischen Industrie dazu verwendet wird, Keramikteile 2, z. B. Keramikplatten, -fliesen, -formkörper oder dergleichen, durch einen bei 3 nur angedeuteten Brennofen zu transportieren. Das Förderband 1 kann dabei in üblicher Weise über Umlenkräder 4 umgelenkt und über angetrebene Rollen 5 abgestützt werden. Das Förderband 1 besteht dabei aus gelenkig miteinander verbundenen Gliedern (wie bei 6 angedeutet), die in Längs- bzw. Umlaufrichtung des Förderbandes endlos zusammengeordnet sind.

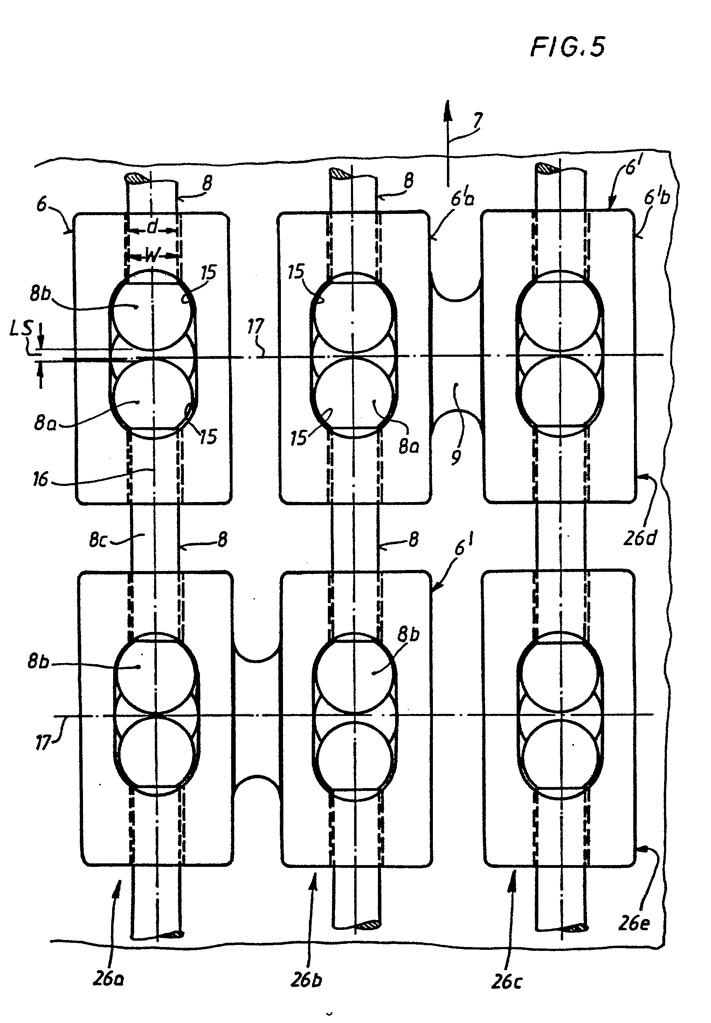

Wie beispielsweise in der Teil-Aufsicht des eigentlichen Förderbandes in Fig. 5 zu erkennen ist, wird es vorgezogen, die Glieder in Längsrichtung und Querrichtung des Förderbandes 1 mit Abständen zueinander so zusammenzuordnen, daß sich eine Transportfläche ergibt, die sich beispielsweise aus Einzelgliedern 6 und paarweise zusammengefaßten Doppelgliedern bzw. Gliedpaaren 6' zusammensetzt. In Längsrichtung (vgl. Pfeil 7) des Förderbandes sind je zwei einander benachbarte Glieder 6 bzw. 6' durch gleichartige Verbindungselemente 8 gelenkig miteinander verbunden, die - wie sich aus Fig. 5 ebenfalls gut erkennen läßt - stabförmig ausgebildet und an beiden Enden mit einem gleichartigen kugelförmigen Kopf 8a bzw. 8b versehen sind, dessen Durchmesser größer ist als der des zylindrischen Mittelteiles 8c.

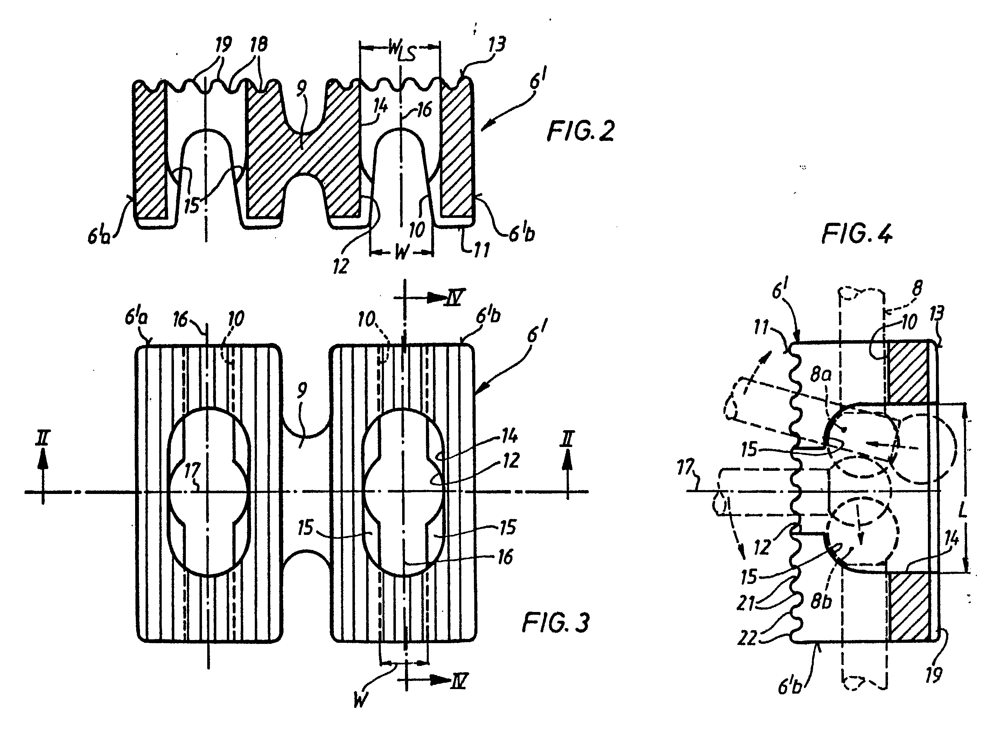

Da die Einzelglieder 6 und die einzelnen Glieder 6'a, 6'b jedes Gliederpaares 6' in Form und Größe sowie in ihrer konstruktiven Gestaltung gleichartig sind, sei anhand der Fig. 2 bis 4 nachfolgend die Ausbildung eines Gliederpaares 6' näher erläutert.

Wie insbesondere in Fig. 2 und zusätzlich auch in Fig. 3 zu erkennen ist, ist dieses Gliederpaar 6' mitsamt einem Quersteg 9 einstückig hergestellt, beispielsweise in einem Stück gegossen, gepreßt oder aus einem einzigen Stück herausgearbeitet. Der gleichhohe oder eine etwas niedrigere Höhe (gemäß Fig. 2) als die beiden einzelnen Glieder 6'a und 6'b aufweisende Quersteg 9 verbindet die beiden einzelnen Glieder 6'a und 6'b - in diesem Bespiel - in demselben Längsabschnitt des Förderbandes, wobei diese einzelnen Glieder 6'a und 6'b parallel zueinander sowie symmetrisch nebeneinander liegen, wobei ihr lichter Abstand voneinander durch die Breite des Steges 9 bestimmt wird. Dieser Quersteg 9 verbindet die beiden in Querrichtung des Förderbandes einander benachbarten einzelnen Glieder 6'a und 6'b somit starr miteinander.

Wie bereits weiter oben angedeutet worden ist, sind die einzelnen Glieder 6'a und 6'b (und gleichzeitig auch die Einzelglieder 6) ansonsten praktisch identisch zueinander ausgebildet, so daß nachfolgend die Beschreibung eines einzelnen Gliedes, z. B. des Gliedes 6'b, hinsichtlich seiner konstruktiven Gestaltung genügt.

Dieses einzelne Glied 6'b besitzt im Grundriß vorzugsweise Rechteckform (Fig. 3) und enthält eine zur Aufnahme von zwei Verbindungselementen 8 (vgl. Fig. 5) bestimmte Längsnut 10, eine von der Gliedunterseite 11 ausgehende und in die Längsnut 10 mündende Quernut 12 sowie einen von der Oberseite 13 des Gliedes ausgehenden, ebenfalls in die Längsnut 10 mündenden Längsschlitz 14. Im dargestellten Ausführungsbeispiel ist die Quernut 12 in Form einer im wesentlichen zylindrischen Bohrung ausgeführt.

Die Weite W der Längsnut 10 ist wenig größer als der Durchmesser d des zylindrischen Mittelteiles 8c der Verbindungselemente 8, wie es beispielsweise im Zusammenhang mit dem Einzelglied 6 in Fig. 5 angedeu tet ist. Wie sich hieraus außerdem sowie insbesondere aus den Fig. 2 und 3 entnehmen läßt, ist die Weite der Quernut 12 (also deren Durchmesser) und die Weite $W_{LS}$ des Längsschlitzes 14 wenig größer als der Durchmesser des Kopfes 8a bzw. 8b der Verbindungselemente 8. Ferner ist die Länge L dieses Längsschlitzes 14 größer als das Doppelte, jedoch kleiner als das Dreifache des Durchmessers vom kugelförmigen Kopf 8a bzw. 8b der Verbindungselemente 8 minus die halbe Weite der Quernut 12, wie sich weitgehend aus der Darstellung in Fig. 4 ersehen läßt (vergleiche strichpunktierte Andeutung der Verbindungselemente 8).

Ferner ist insbesondere in den Fig. 2 und 4 gezeigt, daß die Übergangsfläche bzw. Übergangsflächen 15 zwischen dem Längsschlitz 14 und der Längsnut 10 (kugel-) kalottenförmig gestaltet ist bzw. sind. Diese Formgebung ist derart, daß die beiden Verbindungselemente 8 in der gestreckten Lage (wie in Fig. 4 und 5 dargestellt) mit ihrem zylindrischen Mittelteil 8c und ihrem Kopf 8a bzw. 8b formschlüssig am Boden der Längsnut 10 bzw. an der kalottenförmigen Übergangsfläche 15 anliegen.

Wie in Fig. 4 ferner strichpunktiert angedeutet ist, sind die Verbindungselemente 8 und der Längsschlitz 14 außerdem so bemessen, daß beide Verbindungselemente 8 quer, d. h. senkrecht oder schräg zur Längsnut 10 eingeführt werden können und daß sie dann nach einer Drehung von 90° oder weniger als 90° mit Längsspiel in der Längsnut 10 gehalten werden und gegen ein Herausfallen durch die Quernut 12 gesichert sind. Dieses Längsspiel ist in Fig. 5 am Einzelglied 6 (oben links) mit LS angedeutet. Hinsichtlich der Anordnungen von Längsnut 10, Quernut 12 und Längsschlitz 14 sei noch bemerkt, daß die Längsachse der Längsnut 10 vorzugsweise in der Längsmittelebene 16 jedes einzelnen Gliedes liegt, während die Quernut 12 und der Längsschlitz 14 vorzugsweise (jedoch nicht zwingend) symmetrisch zur Längsmittelebene 16 und zur Quermittelebene 17 jedes einzelnen Gliedes angeordnet sind.

Durch die zuvor beschriebenen konstruktiven Merkmale der einzelnen Glieder und der Verbindungselemente 8 können je zwei in Längsrichtung des Förderbandes 1 einander benachbarte Glieder 6 bzw. 6'a bzw. 6'b auf äußerst einfache Weise und sehr rasch zusammengekuppelt und auseinandergekuppelt werden, wobei bei Ausübung einer Belastung auf de Gliedoberseite 13 (durch aufzunehmendes Fördergut) praktisch keine Durchbiegung der gebildeten Transportfläche nach unten auftritt, so daß das Förderband 1 selbsttragend ist. Die Herstellungstoleranzen der Verbindungselemente 8 und der einzelnen Glieder, insbesondere der darin eingearbeiteten Ausnehmungen (Längsnut 10, Quernut 12 und Längsschlitz 14) sind dabei groß genug, daß durch Hochtemperatureinwirkungen keinerlei Spannungen an den Verbindungsstellen auftreten können.

In den Fig. 2 und 4 ist darüber hinaus angedeutet, daß sowohl die mit Fördergut in Berührung kommende Oberseite 13 als auch die Unterseite 11 der einzelnen Glieder mit einer Vorsprünge aufweisenden Profilierung versehen ist. Diese Profilierung kann jede geeignete Form haben; nach den Fig. 2 bis 4 ist in der Oberseite 13 eine Vielzahl von einander abwechselnden, parallel verlaufenden Längsril-

len 18 und Längsrippen 19 eingearbeitet. An der Unterseite 11 ist dagegen eine Anzahl von einander abwechselnden, parallel verlaufenden Querrillen 20 und Querrippen 21 vorgesehen.

Die Einzelglieder 6 und die Gliederpaare 6' können aus jedem geeigneten Material hergestellt sein. Insbsondere eignen sich dafür (wenn das Förderband 1 durch einen Ofen durchgeführt wird) Metall und Keramik.

Hinsichtlich der Zusammenordnung von einzelnen Gliedern zu Gliederpaaren sei nochmals auf die Darstellung in Fig. 5 Bezug genommen. Wie sich dort erkennen läßt, enthält das Förderband mehrere parallel nebeneinander laufende Gliederlängsreihen 26a, 26b, 26c, wobei die Anzahl der nebeneinanderlaufenden Gliederlängsreihen beliebig sein kann und der gewünschten Breite der Transportfläche angepaßt wird. Im Beispiel dieser Fig. 5 sind die einzelnen Glieder 6, 6'a, 6'b der Gliederlängsreihen 26a, 26b, 26c außerdem in Querrichtung des Förderbandes in parallel zueinander liegenden (jeweils gleiche Quermittelebe nen 17) Querreihen 26d, 26e zusammengeordnet. Da die einzelnen Glieder 6'a, 6'b jedes Gliederpaares 6' in diesem Falle - wie beschrieben - parallel und symmetrisch nebeneinander liegen, ist es zweckmäßig, in einander benachbarten Querreihen 26d, 26e die Gliederpaare 6' in der veranschaulichten Weise jeweils um das Maß eines einzeinen Gliedes gegeneinander zu versetzen, so daß sich in Querrichtung des Förderbandes bzw. dessen Transportfläche ein guter Verband ergibt.

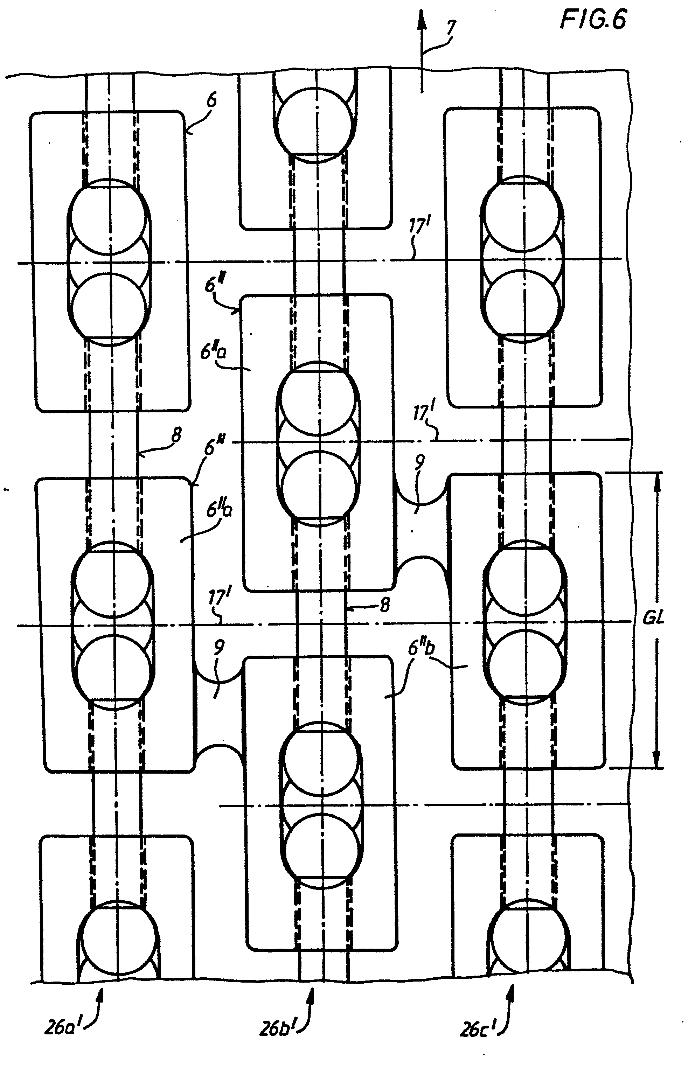

Im Beispiel der Fig. 6 setzt sich die Transportfläche des Förderbandes 1 dagegen zwar ebenfalls aus Einzelgliedern 6 und aus Gliederpaaren 6" zusammen, wobei die Einzelglieder 6 sowie die einzelnen Glieder 6"a und 6"b jedes Gliederpaares 6" grundsätzlich gleichartig aufgebaut und geformt sein können, wie es anhand der Fig. 2 bis 4 erläutert ist. In diesem Falle liegen die einzelnen Glieder 6"a und 6"b jedoch nicht symmetrisch nebeneinander, sondern die beiden einzelnen Glieder 6"a und 6"b jedes Gliederpaares 6" sind in Längsrichtung des Förderbandes (vgl. Pfeil 7) zueinander versetzt. Diese Versetzung der einzelnen Glieder 6"a und 6"b zueinander kann etwa die Hälfte einer Gliedlänge GL oder auch etwas mehr (wie dargestellt) betragen. Die Versetzung ist dabei ferner derart, daß - wie in Fig. 6 gut zu erkennen ist - die Einzelglieder 6 bzw. die einzelnen Glieder 6"a udn 6"b zwar wieder parallel nebeneinanderlaufende Gliederlängsreihen 26a', 26b', 26c' bilden, dabei jedoch die einzelnen Glie der in den einander benachbarten Gliederlängsreihen versetzt zueinander liegen, dies aber vorzugsweise derart, daß die Glieder (z. B. 6"a und 6"b) der jeweils übernächsten Gliederlängsreihen (z. B. 26a' und 26c') jeweils parallel und symmetrisch zueinander (in derselben Querebene 17') liegen. Durch diese versetzte Anordnung bzw. Auf-Lücke-Anordnung ergibt sich eine besonders hohe Selbststeifigkeit bzw. Selbsttragfähigket der gebildeten Transportfläche des Förderbandes.

## Patentansprüche

1. Förderband, bestehend aus endlos angeordneten, gelenkig miteinander verbundenen Gliedern sowie zwischen den Gliedern vorgesehenen Verbindungselementen, wobei
a) die Verbindungselemente (8) stabförmig mit verdickten Enden ausgebildet sind, deren Durchmesser größer ist als der des zylindrischen Mittelteiles (8c) dieser Verbindungselemente,
b) die Glieder (6, 6'a, 6'b, 6"a, 6"b) zur Aufnahme von zwei Verbindungselementen (8) bestimmte, von ihrer Unterseite zugängliche Ausnehmungen (10) enthalten, deren Weite wenig größer ist als die zugehörigen Teile der Verbindungselemente, und
c) die verdickten Enden der Verbindungselemente und die Ausnehmungen der Glieder Kugelgelenkverbindungen bilden, gekennzeichnet durch folgende weitere Merkmale:

d) die verdickten Enden der stabförmigen Verbindungselemente (8) sind durch kugelförmige Köpfe (8a, 8b) gebildet;
e) für die Aufnahme der Verbindungselemente (8) enthalten die Glieder (6, 6'a, 6'b, 6"a, 6"b) wenigstens eine Längsnut (10), eine von der Unterseite der Glieder ausgehende und in diese Längsnut mündende Quernut (12) sowie einen von der Oberseite (13) der Glieder ausgehenden, in die Längsnut einmündenden Längsschlitz (14), wobei die Weite (W) der Längsnut (10) wenig größer ist als der Durchmesser (d) des zylindrischen Mitteilteiles (8c) der Verbindungselemente, die Weite der Quernut (12) und die Weite ($W_{LS}$) des Längsschlitzes (14) wenig größer ist als der Durchmesser der Köpfe (8a, 8b) der Verbindungselemente und wobei die Länge (L) des Längsschlitzes (14) größer ist als das Doppelte, jedoch kleiner als das Dreifache des Durchmessers der kugelförmigen Köpfe (8a, 8b) der Verbindungselemente minus die halbe Weite der Quernut (12);
f) die Übergangsfläche (15) zwischen dem Längsschlitz (14) und der Längsnut (10) ist kalottenförmig derart gestaltet, daß die beiden Verbindungselemente (8) in der gestreckten Lage mit ihrem zylindrischen Mittelteil (8c) und ihrem Kopf (8a, 8b) formschlüssig am Boden der Längsnut bzw. an der kalottenförmigen Übergangsfläche (15) anliegen;
g) die Verbindungselemente (8) und der Längsschlitz (14) sind so bemessen, daß beide Verbindungselemente (8) quer zur Längsnut (10) einführbar und durch Drehung um maximal 90° mit Längsspiel (LS) in der Längsnut (10) gehaltert sind und ein Herausfallen durch die Quernut (12) verhindert ist.

2. Förderband nach Anspruch 1, dadurch gekennzeichnet, daß die Längsachse der Längsnut (10) in der Längsmittelebene (16) des Gliedes (6, 6'a, 6'b) liegt und daß die Quernut (12) und der Längsschlitz (14) symmetrisch zur Längsmittelebene (16) und zur Quermittelebene (17) des Gliedes angeordnet sind.

3. Förderband nach Anspruch 1, dadurch gekennzeichnet, daß wenigstens zwei parallel nebeneinander laufende Gliederlängsreihen (26a, 26b, 26c, 26a', 26b', 26c') vorgesehen sind, die jeweils in Querrichtung des Förderbandes (1) einander benachbarte Glieder (6, 6'a, 6'b, 6"a, 6"b) mit gleich großen Seitenabständen voneinander aufweisen und daß wenigstens ein Teil der in Querrichtung einander benachbarten Glieder (6'a, 6'b bzw. 6"a, 6"b) durch Querstege (9) paarweise starr miteinander verbunden sind.

4. Förderband nach Anspruch 3, dadurch gekennzeichnet, daß die beiden Glieder (6'a, 6'b) jedes Gliederpaares (6') in demselben Längsabschnitt des Förderbandes und symmetrisch nebeneinander liegen.

5. Förderband nach Anspruch 3, dadurch gekennzeichnet, daß je zwei paarweise in Querrichtung miteinander verbundene Glieder (6"a, 6"b) in Längsrichtung (7) des Förderbandes versetzt zueinander liegen.

6. Förderband nach Anspruch 3, dadurch gekennzeichnet, daß jedes Gliederpaar (6', 6") mit seinem Quersteg (9) einstückig hergestellt ist.

7. Förderband nach Anspruch 1, dadurch gekennzeichnet, daß die Glieder (6'a, 6'b) zumindest an ihrer mit Fördergut in Berührung kommenden Oberseite (13) eine Vorsprünge aufweisende Profilierung (18, 19) besitzen.

8. Förderband nach Anspruch 1, dadurch gekennzeichnet, daß die Glieder und die Verbindungselemente aus Metall, Sintermetall, Keramik, Graphit oder Kunststoff hergestellt sind.

**Revendications**

1. Bande transporteuse se composant de maillons reliés par articulations et formant une boucle sans fin ainsi que d'éléments de liaison prévus entre les maillons,
a) les éléments de liaison (8) étant conformés en tiges dont les extrémités comportent des surépaisseurs dont le diamètre est supérieur à celui de la partie médiane cylindrique (8c) de ces éléments,
b) les maillons (6, 6'a, 6b', 6"a, 6"b) comportant des évidements (10) accessibles par leur côté inférieur et destinés à loger deux éléments de liaison (8), la largeur de ces évidements étant légèrement supérieure à celle des parties correspondantes des éléments de liaison, et
c) les surépaisseurs des extrémités des éléments de liaison et les évidements des maillons formant des joints à rotule, caractérisée par les particularités suivantes:
d) les surépaisseurs des extrémités des éléments de liaison en forme de tiges (8) sont formées de têtes sphériques (8a, 8b);
e) les maillons (6, 6'a, 6'b, 6"a, 6"b) comportent, pour loger les éléments de liaison (8), au moins une gorge longitudinale (10), une gorge transversale (12) partant du côté inférieur des maillons et débouchant dans ladite gorge longitudinale, ainsi qu'une boutonnière longitudinale (14) partant du côté supérieur (13) des maillons et débouchant dans la gorge longitudinale, la largeur (W) de la gorge longitudinale (10) étant légèrement supérieure au diamètre (d) de la partie médiane cylindrique (8c) des éléments de liaison, la largeur de la gorge transversale (12) et la largeur ($W_{LS}$) de la boutonnière longitudinale (14) étant légèrement supérieures au diamètre des têtes (8a, 8b) des éléments de liaison et la longueur (L) de la boutonnière longitudinale (14) étant supérieure au double, mais inférieure au triple du diamètre des têtes sphériques (8a, 8b) des éléments de liaison moins la demi-largeur de la gorge transversale (12);
f) la surface de transition (15) entre la boutonnière longitudinale (14) et la gorge longitudinale (10) est en forme de calotte conformée de manière telle que la partie médiane cylindrique (8c) et la tête (8a, 8b) des deux éléments de liaison (8) de la bande en position de traction reposent contre le fond de la gorge longitudinale et respectivement contre la surface de transition en forme de calotte (15) dont les formes sont complémentaires de celles de ladite partie médiane et des têtes des éléments de liaison;
g) les éléments de liaison (8) et la boutonnière longitudinale (14) sont dimensionnés de manière que deux éléments de liaison (8) puissent être introduits dans l'évidement perpendiculairement à la gorge longitudinale (10) et être tenus dans cette dernière avec jeu longitudinal (LS) après rotation d'au maximum 90° de façon à les empêcher de tomber par la gorge transversale (12).

2. Bande transporteuse selon la revendication 1, caractérisée en ce que l'axe de symétrie longitudinal de la gorge longitudinale (10) est situé dans le plan de symétrie longitudinal (16) du maillon (6, 6'a, 6'b) et la gorge transversale (12) ainsi que la boutonnière longitudinale (14) sont placées symétriquement par rapport au plan de symétrie longitudinal (16) et au plan de symétrie transversal (17) du maillon.

3. Bande transporteuse selon la revendication 1, caractérisée en ce qu'elle comprend au moins deux rangées longitudinales et parallèles de maillons se déplaçant côte à côte (26a, 26b, 26c, 26a', 26b', 26c'), les maillons (6, 6'a, 6'b, 6"a, 6"b) étant voisins en direction transversale de la bande transporteuse (1) et placés à des distances latérales identiques les uns par rapport aux autres et au moins une partie des maillons (6'a, 6'b ainsi que 6"a, 6"b) qui sont voisins en direction transversale sont solidarisés en groupes de deux par des entretoises transversales (9).

4. Bande transporteuse selon la revendication 3, caractérisée en ce que les maillons (6'a, 6'b) de chaque groupe de deux (6') se trouvent dans le même tronçon longitudinal de la bande transporteuse et sont placés symétriquement côte à côte.

5. Bande transporteuse selon la revendication 3, caractérisée en ce que les maillons (6"a, 6"b) reliés transversalement deux à deux de chacun desdits groupes sont décalés l'un par rapport à l'autre dans la direction de la longueur (7) de la bande transporteuse.

6. Bande transporteuse selon la revendication 3, caractérisée en ce que chaque groupe de deux maillons (6', 6") est en une pièce avec son entretoise transversale (9).

7. Bande transporteuse selon la revendication 1, caractérisée en ce qu'au moins le côté supérieur (13) des maillons (6'a, 6'b) qui entre en contact avec les produits transportés comporte un profilage (18, 19) présentant des parties en saillie.

8. Bande transporteuse selon la revendication 1, caractérisée en ce que les maillons et les éléments de liaison sont en métal, en métal fritté, en céramique, en graphite ou en matière synthétique.

## Claims

1. Conveyor belt, consisting of members which are hinged together in a continuous arrangement as well as connecting elements provided between the members, in which
   a) the connecting elements are bar-shaped with thickened ends, the diameter of which is greater than that of the cylindrical central part (8c) of these connecting elements,
   b) the members (6, 6'a, 6'b, 6"a, 6"b) contain recesses which are accessible from their underside and are intended to receive two connecting elements (8), the width of these recesses being a little greater than the appertaining parts of the connecting elements, and
   c) the thickened ends of the connecting elements and the recesses of the members form ball joint connections,
   characterised by the following further features:
   d) the thickened ends of the bar-shaped connecting elements (8) are formed by ball-shaped heads (8a, 8b);
   e) in order to receive the connecting elements (8) the sections (6, 6'a, 6'b, 6"a, 6"b) contain at least one longitudinal groove (10), a transverse groove (12) going out from the underside of the sections and opening into this longitudinal groove, as well as a longitudinal slot (14) going out from the upper face (13) of the members and opening into the longitudinal groove, the width (W) of the longitudinal groove (10) being a little greater than the diameter (d) of the cylindrical central part (8c) of the connecting elements, the width of the transverse groove (12) and the width ($W_{LS}$) of the longitudinal slot (14) being a little greater than the diameter of the heads (8a, 8b) of the connecting elements, and the length (L) of the longitudinal slot (14) being greater than twice but less than three times the diameter of the ball-shaped heads (8a, 8b) of the connecting elements minus half the width of the transverse groove (12);
   f) the transition surface between the longitudinal slot (14) and the longitudinal groove (10) is of cup-shaped construction in such a way that in the extended position the two connecting elements (8) butt with their cylindrical central part (8c) and their head (8a, 8b) in a form-locking manner against the base of the longitudinal groove or against the cup-shaped transition surface (15);
   g) the connecting elements (8) and the longitudinal slot (14) are dimensioned so that both connecting elements can be introduced at right angles to the longitudinal groove (10) and are retained in the longitudinal groove (10) by rotation by a maximum of 90° with longitudinal clearance (LS), being prevented from falling out by the transverse groove (12).

2. Conveyor belt as claimed in claim 1, characterised in that the longitudinal axis of the longitudinal groove (10) lies in the longitudinal central plane (16) of the member (6, 6'a, 6'b) and that the transverse groove (12) and the longitudinal slot (14) are arranged symmetrically with respect to the longitudinal central plane (16) and to the transverse central plane (17) of the member.

3. Conveyor belt as claimed in claim 1, characterised in that at least two long rows of members (26a, 26b, 26c, 26a', 26b', 26c') running parallel alongside one another are provided, being laterally spaced from each other at equal distances in the cross direction of the conveyor belt (1), and at least some of the members (6'a, 6'b, or 6"a, 6"b) which are adjacent to one another in the cross direction are rigidly connected to one another in pairs by crossbars (9).

4. Conveyor belt as claimed in claim 3, characterised in that the two members (6'a, 6'b) of each pair of members (6') lie in the same longitudinal section of the conveyor belt and symmetrically adjacent to one another.

5. Conveyor belt as claimed in claim 3, characterised in that the two members (6"a, 6"b) which are connected to one another in pairs in the cross direction are offset from one another in the longitudinal direction (7) of the conveyor belt.

6. Conveyor belt as claimed in claim 3, characterised in that each pair of members (6', 6") is produced in one piece with its crossbar (9).

7. Conveyor belt as claimed in claim 1, characterised in that the members (6'a, 6'b) have a profiling (18, 19) with projections at least on their upper face (13) which comes into contact with the material being conveyed.

8. Conveyor belt as claimed in claim 1, characterised in that the members and the connecting elements are made from metal, sintered metal, ceramic, graphite or plastic.

FIG.1

EP 0 258 555 B1

FIG.2

FIG.4

FIG.3

EP 0 258 555 B1

*FIG.5*

FIG.6